# EUROPÄISCHE PATENTANMELDUNG

(11) **EP 1 231 081 A2**
(43) Veröffentlichungstag der Anmeldung: **14.08.2002**
(21) Anmeldenummer: 02002616.7
(22) Anmeldetag: 05.02.2002
(51) Int. Cl.: B60C 11/13, B60C 11/11

(54) **Fahrzeugreifen**

(30) Priorität: 09.02.2001 DE 10106454
(71) Anmelder: Continental Aktiengesellschaft, 30165 Hannover (DE)
(72) Erfinder: Fischer, Carsten, Dr., 66265 Heusweiler (DE); Lange, Holger, Dr., 30449 Hannover (DE); Heine, Stefan, 30163 Hannover (DE)

(57) **Zusammenfassung**

Der Fahrzeugreifen weist eine Lauffläche, welche durch eine Anzahl von Nuten, wie in Umfangsrichtung umlaufende Nuten (2, 2', 12) und/oder Quernuten (3, 3'), in eine Vielzahl von Profilpositive, wie Profilblöcke (1, 1') und/oder Bänder, gegliedert ist, auf und ist mit von außen sichtbaren Oberflächenbereichen mit einer mikroskopischen Gestalt aus einer Vielzahl von Erhebungen, insbesondere in Form von spitzen Riffelungen und/oder Noppen, versehen.

Gemäß der Erfindung ist die mikroskopischen Gestalt an Oberflächenbereichen vorgesehen, die durch Nuten (2, 2', 12, 3, 3') begrenzt sind.

## Beschreibung

Die Erfindung betrifft einen Fahrzeugreifen mit einer Lauffläche, welche durch eine Anzahl von Nuten, wie in Umfangsrichtung umlaufende Nuten und/oder Quernuten, in eine Vielzahl von Profilpositive, wie Profilblöcke und/oder Bänder, gegliedert ist, und mit von außen sichtbaren Oberflächenbereichen mit einer mikroskopischen Gestalt aus einer Vielzahl von Erhebungen, insbesondere in Form von spitzen Riffelungen und/oder Noppen.

Aus der EP-A-1 063 071 ist es bekannt, die Seitenwände von Fahrzeugreifen mit Oberflächenbereichen aus winzigen Riffelgraten und/oder Noppen zu versehen. Eine derartige mikroskopische Gestalt der Oberfläche von Seitenwänden stellt deren gute Selbstreinigung sicher. Der Selbstreinigungseffekt beruht dabei darauf, dass Schmutzpartikel nur auf den Spitzen bzw. Graten der Erhebungen zu sitzen kommen und dadurch sehr wenig Kontakt zum Untergrund haben. Die mikroskopische Gestalt bedingt ferner, dass auch Wassertropfen nur mit den Spitzen der Erhebungen in Berührung kommen, sodass die Kontaktflächen winzig klein bleiben. Daraus resultiert eine außerordentlich niedrige Adhäsion, die Wassertropfen perlen ab und nehmen, falls vorhanden, Schmutzpartikel mit.

Aus der WO 96/04123 ist es bekannt, Gegenstände mit einer künstlichen Oberflächenstruktur aus winzigen Erhebungen und Vertiefungen zu versehen, wobei der Abstand zwischen den Erhebungen bis 200 µm und die Höhe der Erhebungen bis zu 100 µm betragen kann. Zumindest die Erhebungen sollen dabei aus hydrophoben Polymeren oder haltbar-hydrophobierten Materialien bestehen. Auch hier ist es Zweck der Erhebungen, eine Selbstreinigung der Oberfläche des Gegenstandes zu erzielen.

Aus beiden Patentdokumenten ist es daher bekannt, die Oberfläche oder Oberflächenbereiche von Gegenständen künstlich selbstreinigend zu gestalten.

Die Erfindung befasst sich damit, eine weitere vorteilhafte Anwendungsmöglichkeit einer derartigen Oberflächenstruktur am Fahrzeugreifen aufzufinden.

Bei einem erfindungsgemäß ausgeführten Fahrzeugreifen sind durch Nuten begrenzte Oberflächenbereiche mit einer mikroskopischen Gestalt versehen.

Bei einem erfindungsgemäß ausgeführten Fahrzeugreifen wird vor allem die sehr geringe Adhäsion von Wasser - Wassertropfen, Schneeteilchen, Wasser/Schneeteilchen- zu mikroskopisch kleinen Erhebungen und demnach die Tatsache, dass die Erhebungen eine schlecht benetzende Oberfläche bilden, ausgenützt. Erfindungsgemäß strukturierte Begrenzungsflächen von Nuten unterstützen und verbessern daher die Aquaplaning-Eigenschaften des Reifens sowie über den Selbstreinigungseffekt die Schneetraktionseigenschaften. Diese Verbesserung zeigt sich sowohl auf nassem als auch auf Schnee bedecktem oder matschigem Untergrund.

Gemäß einer bevorzugten Ausführungsform der Erfindung wird zumindest der Bereich des Nutgrundes der Nuten mit der mikroskopischen Gestalt versehen (Anspruch 2). Dies ist besonders günstig, um eine deutliche Reduktion des Strömungswiderstandes durch eine Verringerung des Entstehens von Strömungswirbeln zu erzielen.

Um ein möglichst optimales Ergebnis hinsichtlich des Selbstreinigungseffektes und der sehr geringen Adhäsion sicherzustellen, ist es von Vorteil, wenn die in den weiteren Unteransprüchen, den Ansprüchen 3 bis 17 enthaltenen Ausgestaltungen und Dimensionen für die Riffelungen bzw. die Noppen eingehalten werden.

Weitere Merkmale, Vorteile und Einzelheiten der Erfindung werden nun anhand der Zeichnung, die in schematischen Darstellungen mehrere Ausführungsbeispiele enthält, näher beschrieben. Dabei zeigen
Fig. 1 eine Schrägansicht auf einen Teilbereich eines Laufflächenprofils für einen Fahrzeugluftreifen,
Fig. 2 eine Draufsicht auf eine Teilabwicklung einer Ausführungsform eines Laufflächenprofils für einen Fahrzeugluftreifen,
Fig. 3 einen stark vergrößerten, nicht maßstabsgetreuen Schnitt durch das Detail A der Fig. 1,
Fig. 4 eine Variante des Details A aus Fig. 1, analog zu Fig. 3 und
Fig. 5 eine Schrägansicht einer weiteren Variante des Details A aus Fig. 1.

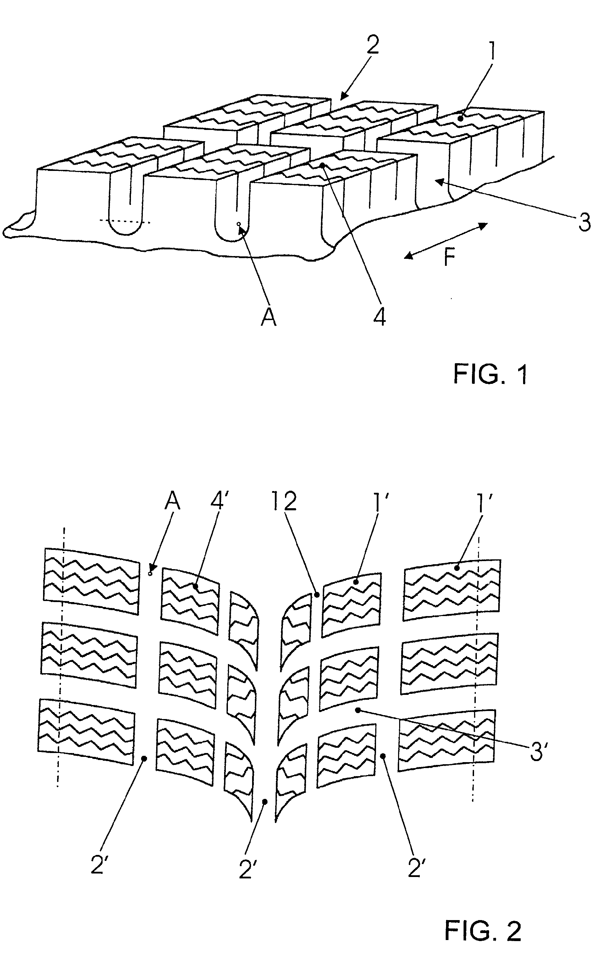

Fig. 1 zeigt eine Ansicht eines Teilbereiches eines Laufflächenprofils mit einer Anzahl von Profilblöcken 1. Die Profilblöcke 1 sind in Blockreihen angeordnet, die parallel zur Umfangsrichtung verlaufen, die in Fig. 1 durch den Doppelpfeil F gekennzeichnet ist. Die einzelnen Profilblöcke 1 sind durch Umfangsnuten 2 und durch Quernuten 3 voneinander getrennt. Beim dargestellten Teilbereich reichen sowohl die Umfangsnuten 2 als auch die Quernuten 3 auf die vorgesehene Profiltiefe, die bei PKW-Reifen im Allgemeinen 7 bis 8 mm beträgt. Bei der dargestellten Ausführungsform sind ferner die einzelnen Profilblöcke 1 jeweils mit einer Anzahl von Einschnitten 4 versehen, die die Profilblöcke 1 parallel zu den Quernuten 3 durchqueren. Die Einschnitte 4 weisen einen zickzackförmigen Verlauf auf und können in der für Einschnitte üblichen Breite von 0,4 bis 0,6 mm ausgeführt sein.

Fig. 2 zeigt eine mögliche Variante eines Laufflächenprofils für einen PKW-Winterreifen anhand einer Teilabwicklung, wobei das hier dargestellte Laufflächenprofil eine breite zentrale Umfangsnut 2' und schulterseitig je eine weitere breite Umfangsnut 2' aufweist. Durch bezüglich der zentralen Umfangsnut 2' V-förmig und somit gepfeilt verlaufende Quernuten 3' ist das Profil in Profilblöcke 1' gegliedert. Schmälere Umfangsnuten 12, die jeweils zwischen der zentralen Umfangsnut 2' und den breiten schulterseitigen Umfangsnuten 2' verlaufen, bewirken eine weitere Gliederung des Profils in Blockreihen. Wie bei der Ausführung gemäß Fig. 1 sind auch die Profilblöcke 1' des in Fig. 2 gezeigten Profils mit einer Vielzahl von zickzackförmig verlaufenden Einschnitten 4' versehen.

Gemäß der Erfindung ist der Bereich des Nutgrundes der Umfangsnuten 2, 2' und 12 sowie der Quernuten 3, 3' zumindest zum Teil mit einer besonderen mikroskopischen Oberflächengestalt ausgeführt. Unter Nutgrund wird dabei zumindest jener Bereich der die Nuten begrenzenden Flächen verstanden, der den hier gekrümmten "Talbereich" zwischen benachbarten Blöcken bildet. In Fig. 1 liegt dieser Bereich unterhalb der strichliert eingezeichneten Linie. Die im Folgenden näher beschriebene mikroskopische Gestalt der Gummioberflächen im Bereich des Nutgrundes kann sich jedoch auch bis zur Peripherie der Profilblöcke 1, 1' erstrecken.

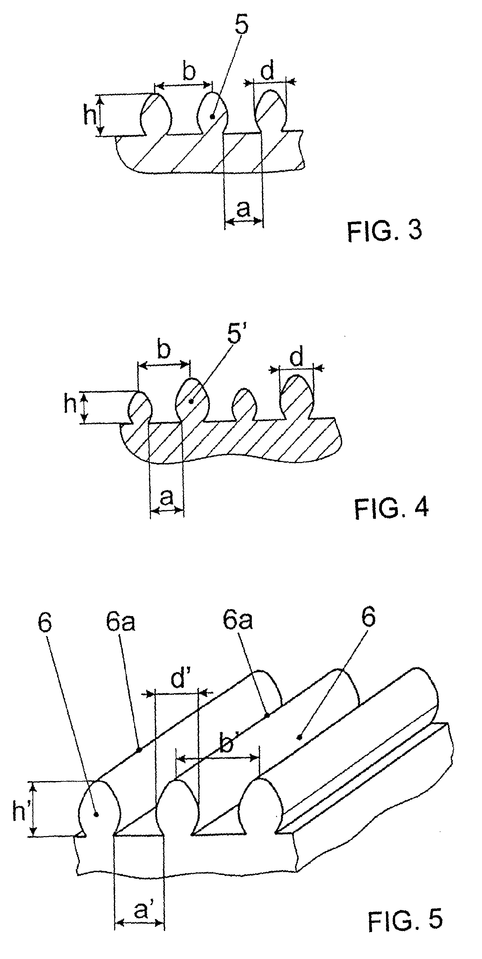

Fig. 3 zeigt eine Ausführungsvariante dieser mikroskopischen Gestalt anhand eines stark vergrößerten Querschnittes durch das mit A bezeichnete Detail aus Fig. 1 und 2. Die mikroskopische Gestalt setzt sich aus winzigen Noppen 5 bestimmter Größe und Anordnung zusammen. In Fig. 3 sind die Noppen 5 zumindest im Wesentlichen kuppelförmig gestaltet, sämtlich zumindest im Wesentlichen gleich groß ausgeführt und regelmäßig verteilt angeordnet. Die Noppen 5 weisen eine Höhe h auf, die um mindestens 10 µm die jeweils umgebenden Täler der mikroskopischen Oberflächengestalt überragt, wobei h zwischen 10 und 25 µm, insbesondere zwischen 15 bis 20 µm, gewählt wird. Der größte Durchmesser d der Noppen 5 entspricht im Wesentlichen ihrer Höhe h oder ist geringfügig größer oder kleiner als diese. Der gegenseitige Abstand a an der Basis benachbarter Noppen 5 beträgt zwischen 5 und 25 µm, insbesondere zwischen 15 und 20 µm. Der Abstand b von Noppenspitze zu Noppenspitze beträgt zwischen 5 und 60 µm und ist insbesondere ≤ 20 µm, vorzugsweise zwischen 15 und 20 µm.

Bei der in Fig. 4 gezeigten Ausführungsform weisen die Noppen 5' unterschiedliche Größen auf und sind auch unregelmäßiger angeordnet. Auch bei dieser Ausführungsvariante gelten jedoch die oben erwähnten Bereiche für die in der Figur eingezeichneten Abmessungen a, h, d und b.

Bei beiden Ausführungsvarianten sind ferner die Spitzen bzw. Spitzenbereiche der Noppen 5, 5' mit einem Oberflächenkrümmungsradius in der Größenordnung zwischen 3 µm und 25 µm versehen.

Oberflächen mit kuppelförmigen Noppen mit gewissen Unregelmäßigkeiten, ähnlich zur Darstellung in Fig. 4, sind aus der Natur bekannt und zwar von Oberflächen von Lotusblättern. Die Lotusblatt-Oberfläche ist eine ideal hydrophobe Oberfläche, wofür einerseits deren Bedeckung mit einem besonderen Pflanzenwachs und andererseits ihre nicht benetzende, rauhe Oberfläche verantwortlich sind. Gerade die mikroskopische Gestalt der Lotusblatt-Oberfläche gewährleistet eine wichtige Bedingung der Hydrophobie, den minimalen punktförmigen Kontakt von Flüssigkeit zum festen Körper bzw. zur Blattoberfläche. Die derart abperlenden und über die Oberfläche fließenden Wassertropfen haben die Fähigkeit, die Oberfläche von Schmutzpartikeln zu befreien. Im Rahmen der Erfindung wird dieser Effekt bei Gummioberflächen, hier im Bereich der Nutwände und des Nutgrundes, nachgestellt, um das Abfließen von Wasser, Schneematsch und das Abgleiten von Schneepartikeln im Bereich der Nuten zu begünstigen und zu beschleunigen.

Die Effekte der Selbstreinigung und der sehr geringen Adhäsion von Wasser kann auch durch eine Riffelung der Oberfläche erzielt werden. Unter Riffelung ist dabei eine Anzahl von übereinander zumindest im Wesentlichen parallel verlaufenden Erhebungen 6 zu verstehen, wie sie beispielsweise in Fig. 5 dargestellt sind. Die einzelnen Erhebungen 6 weisen einen kuppelförmigen und somit dem Querschnitt der Noppen aus Fig. 3 sehr ähnlichen Querschnitt auf. Die Erhebungen 6 können, wie dargestellt, einen geraden Verlauf aufweisen oder auch in beliebiger Form gekrümmt verlaufen. Was die gegenseitige Anordnung der einzelnen Erhebungen 6 und ihre Abmessungen betrifft, so wird der Abstand b' von einander benachbarten Gratbereichen 6a zwischen 4 µm und 40 µm, insbesondere ≤ 15 µm, gewählt. Der gegenseitige Abstand a' im Bereich der Basis vom benachbarten Erhebungen 6 beträgt zwischen 5 und 10 µm. Die Höhe h' der Erhebungen 6 überragt um mindestens 10 µm die jeweils umgebenden Täler der Oberflächengestalt, wobei h' bis zu 25 µm, insbesondere jedoch zwischen 15 und 20 µm, beträgt. Die Riffelgrate 6a weisen ebenfalls einen Oberflächenkrümmungsradius, hier in der Größenordnung zwischen 2 und 15 µm, auf. Auch bei dieser Ausführungsform gilt, dass die einen bestimmten Oberflächenbereich gestaltenden Erhebungen 6 mit unterschiedlichen Querschnittsgrößen versehen werden können.

Die Querschnittsgestalt einer Kuppel ist bei den dargestellten Ausführungsformen die bevorzugte Querschnittsgestalt. Die Noppen 5, 5' sowie die Erhebungen 6 können auch andere Querschnitte, beispielsweise Dreieck ähnliche Querschnitte, aufweisen.

Um erfindungsgemäß ausgeführte Oberflächen in Nuten von Fahrzeugreifen zu erzeugen, können moderne Technologien, beispielsweise die Lasertechnik, herangezogen werden. Die Nuten erfindungsgemäß ausgeführter Laufflächenprofile von Fahrzeugreifen werden, wie es bei herkömmlichen Reifen üblich ist, durch metallische Stege, die ein Netzwerk entsprechend dem zu erstellenden "Nutmuster" bilden und an den das Profil ausformenden Segmenten einer Vulkanisationsform vorgesehen sind, durch Abformen hergestellt.

Um erfindungsgemäße Oberflächen durch Abformen von Stegen erzeugen zu können, können die zunächst herkömmlich hergestellten Stege mit der üblichen glatten Metalloberfläche erstellt werden. Anschließend können mittels eines Laserstrahles rasterförmige oder punktrasterförmige Vertiefungen eingebracht werden, zwischen denen entsprechende erhabene Bereiche stehen bleiben.

Bezüglich weiterer möglicher Verfahren zur Herstellung von derartigen Oberflächen an Teilen von Vulkanisationsformen wird auf die EP-A-1 063 071 verwiesen.

Erfindungsgemäße Oberflächen können auch eine andere Gestalt, beispielsweise ähnlich einer Haifischhaut, aufweisen.

## Patentansprüche

1. Fahrzeugreifen mit einer Lauffläche, welche durch eine Anzahl von Nuten, wie in Umfangsrichtung umlaufende Nuten (2, 2', 12) und/oder Quernuten (3, 3'), in eine Vielzahl von Profilpositive, wie Profilblöcke (1,1') und/oder Bänder, gegliedert ist, und mit von außen sichtbaren Oberflächenbereichen mit einer mikroskopischen Gestalt aus einer Vielzahl von Erhebungen, insbesondere in Form von spitzen Riffelungen (6) und/oder Noppen (5, 5'),
**dadurch gekennzeichnet,**
**dass** durch Nuten (2, 2', 12, 3, 3') begrenzte Oberflächenbereiche mit einer mikroskopischen Gestalt versehen sind.

2. Fahrzeugreifen nach Anspruch 1, **dadurch gekennzeichnet, dass** zumindest der Bereich des Nutgrundes mit der mikroskopischen Gestalt versehen ist.

3. Fahrzeugreifen nach Anspruch 1 oder 2, **dadurch gekennzeichnet, dass** zumindest ein Teil der die Nut(en) (2, 2', 12, 3, 3') begrenzenden Oberfläche in solcher Weise geriffelt ist, dass der Abstand (b') von Riffelgrat (6a) zu Riffelgrat (6a) zwischen 4 µm und 40 µm beträgt.

4. Fahrzeugreifen nach Anspruch 1 oder 2, **dadurch gekennzeichnet, dass** zumindest ein Teil der die Nut(en) (2, 2', 12, 3, 3') begrenzenden Oberfläche in solcher Weise genoppt ist, dass der Abstand (b') von Noppenspitze zu Noppenspitze zwischen 5 µm und 60 µm beträgt.

5. Fahrzeugreifen nach einem der Ansprüche 1 bis 3, **dadurch gekennzeichnet, dass** der Abstand (b') von Riffelgrat (6a) zu Riffelgrat (6a) ≤ 15 µm ist.

6. Fahrzeugreifen nach einem der Ansprüche 1, 2 oder 4, **dadurch gekennzeichnet, dass** der Abstand (b) von Noppenspitze zu Noppenspitze ≤ 20 µm ist.

7. Fahrzeugreifen nach Anspruch 6, **dadurch gekennzeichnet, dass** der Abstand (b) von Noppenspitze zu Noppenspitze zwischen 15 und 20 µm beträgt.

8. Fahrzeugreifen nach einem der vorhergehenden Ansprüche, **dadurch gekennzeichnet, dass** der gegenseitige Abstand (6a') der die Riffelung bildenden Erhebungen (6) an deren Basis bzw. der gegenseitige Abstand (a) der Noppen (5, 5') an deren Basis zwischen 5 und 10 µm, beträgt.

9. Fahrzeugreifen nach einem der vorangehenden Ansprüche, **dadurch gekennzeichnet, dass** die Riffelgrate (6a) bzw. die Noppenspitzen um mindestens 10 µm die jeweils umgebenden Täler der mikroskopischen Oberflächengestalt überragen.

10. Fahrzeugreifen nach einem der vorangehenden Ansprüche, **dadurch gekennzeichnet, dass** die Höhe (h'), der die Riffelung bildenden Erhebungen (6) bzw. der Noppen (5, 5') zumindest 15 µm beträgt.

11. Fahrzeugreifen nach einem der vorhergehenden Anprüche, **dadurch gekennzeichnet, dass** die größte Breite (d, d') der die Riffelung bildenden Erhebungen (6) bzw. der Noppen (5, 5') zumindest im Wesentlichen mit ihrer jeweiligen Höhe (h, h') übereinstimmt.

12. Fahrzeugreifen nach einem der vorhergehenden Ansprüche, **dadurch gekennzeichnet, dass** die die Riffelung bildenden Erhebungen (6) bzw. die Noppen (5') zumindest im Wesentlichen übereinstimmende Größe aufweisen.

13. Fahrzeugreifen nach einem der vorhergehenden Ansprüche, **dadurch gekennzeichnet, dass** die die Riffelung bildenden Erhebungen (6) bzw. die Noppen (5, 5') zumindest zum Teil unterschiedliche Größen aufweisen.

14. Fahrzeugreifen nach einem der vorhergehenden Ansprüche, **dadurch gekennzeichnet, dass** die Noppen (5, 5') regelmäßig oder unregelmäßig angeordnet sind.

15. Fahrzeugreifen nach einem der vorhergehenden Ansprüche, **dadurch gekennzeichnet, dass** die Noppen (5, 5') zumindest im Wesentlichen kuppelförmig gestaltet sind.

16. Fahrzeugreifen nach einem der vorhergehenden Ansprüche, **dadurch gekennzeichnet, dass** die die Riffelung bildenden Erhebungen (6) einen kuppelförmigen Querschnitt aufweisen.

17. Fahrzeugreifen nach einem der vorangehenden Ansprüche, **dadurch gekennzeichnet, dass** in jedem Riffelgrat (6a) der Oberflächenkrümmungsradius zwischen 2 µm und 15 µm bzw. in jeder Noppenspitze der Oberflächenkrümmungsradius zwischen 3 µm und 25 µm beträgt.
